# FASCICULE DE BREVET EUROPEEN

(11) **EP 2 916 266 B1**
(45) Date de publication et mention de la délivrance du brevet: **11.07.2018**
(21) Numéro de dépôt: 15158110.5
(22) Date de dépôt: 06.03.2015
(51) Int. Cl.: G06K 13/08, G07F 7/08

(54) **Bloc de lecture de carte à mémoire, terminal de traitement de données transactionnelles correspondant**
Leseblock für Speicherkarte, entsprechendes Endgerät für die Verarbeitung von Transaktionsdaten
Memory card reading block, corresponding transactional data processing terminal

(30) Priorité: 07.03.2014 FR 1451899
(43) Date de publication de la demande: 09.09.2015
(73) Titulaire: Ingenico Group, 75015 Paris (FR)
(72) Inventeur: Dubois, Eric, 26120 MONTVENDRE (FR); Maisonnat, Serge, 26600 MERCUROL (FR); Allirot, Richard, 38700 CORENC (FR)
(74) Mandataire: Vidon Brevets & Stratégie

(56) Documents cités:
- EP-A1- 1 909 216
- EP-A2- 1 067 474

## Description

### 1. Domaine de l'invention

L'invention se rapporte au domaine des terminaux de paiement, permettant un paiement en utilisant une carte à mémoire (également appelée carte de crédit).

Plus particulièrement, l'invention se rapporte au domaine des terminaux de paiement auprès desquels une surveillance extérieure n'est pas forcément effectuée. De tels terminaux sont par exemple présents dans des parkings, dans des stations-service, etc.

Ces terminaux sont utilisés lorsqu'il n'est pas nécessaire de disposer d'un opérateur pour effectuer un paiement de bien ou de service.

### 2. Art antérieur

Les terminaux de paiement font face à des fraudes ou a des tentatives de fraude de plus en plus sophistiquées et de plus en plus ingénieuses. Il existe plusieurs types de fraude. Une première typologie permet de distinguer les fraudes nécessitant une introduction au sein du terminal et les fraudes ne nécessitant pas d'introduction au sein du terminal.

Dans le type de fraude ne nécessitant pas d'introduction au sein du terminal, on peut établir une autre typologie : les fraudes avec adjonction d'un dispositif complémentaire sur le terminal (comme par exemple une fausse façade ou un faux clavier) et les fraudes sans adjonction d'un dispositif complémentaire sur le terminal.

Dans le cadre d'un terminal de paiement qui n'est pas soumis à surveillance, les fraudeurs peuvent disposer d'une plage horaire importante pour pouvoir réaliser par exemple une fraude par ajout d'un dispositif complémentaire. En effet, la nuit, dans une station-service ou dans un parking les passages de personnes sont peu nombreux et une telle fraude est aisément envisageable.

Jusqu'à récemment, lorsque des fraudeurs ajoutaient un dispositif complémentaire sur le terminal, l'adjonction était assez facilement détectable. L'adjonction d'un faux clavier sur le terminal pouvait être détectée par un utilisateur avec un niveau de vigilance standard, surtout quand cet utilisateur était un utilisateur régulier du terminal.

Récemment une nouvelle technique de fraude a fait son apparition : les fraudeurs n'ajoutent plus un clavier complet mais seulement un dispositif de lecture de données de carte. Pour qu'il soit discret, ce dispositif est placé à l'entrée de la fente d'insertion de la carte. Concrètement, ce dispositif de fraude à une forme générale de parallélépipède rectangle. Il est fixé à l'entrée du lecteur de carte. Lorsqu'une carte bancaire est insérée dans le terminal, ce dispositif permet de lire les données présentes sur la carte. Plus particulièrement, ce dispositif de fraude permet de lire les données présentes sur la piste magnétique de la carte qui est insérée dans le lecteur. Ainsi, lorsque l'utilisateur souhaite effectuer une transaction de paiement sur ce terminal, il insère sa carte dans le lecteur. Lorsque la carte est insérée, le dispositif de fraude enregistre les données de la piste magnétique. Le dispositif de fraude dispose donc d'une tête de lecture magnétique, sensiblement identique à celle d'un véritable terminal de paiement.

Ce module de fraude peut également comprendre un module de transmission GSM permettant de transmettre, par SMS par exemple, les données ainsi récupérées.

Pour contrer de telles techniques de fraude, des dispositifs existent. Il s'agit par exemple de dispositif de mesure capacitive. Ces dispositifs sont situés à l'intérieur du terminal et peuvent détecter l'ajout de matériels complémentaires sur une face du terminal. Le problème est d'une part qu'un tel dispositif de détection capacitive coute relativement cher et d'autre part qu'il est efficace pour détecter des dispositifs de fraude de taille relativement importante.

La demande de brevet EP1909216A1 divulgue un lecteur de carte comprenant un évidemment d'insertion pour faciliter la saisie de cartes bancaires. Cependant, ce lecteur ne permet pas de contrer la tête de lecture frauduleuse placée au niveau de la fente d'insertion.

La demande de brevet EP1067474A2 divulgue un terminal transactionnel comprenant un lecteur de carte magnétique qui comprend en particulier une zone étendue de la fente d'insertion. Cette zone étendue permet d'empêcher l'attachement d'une tête de lecture illégale dehors la fente. Cependant, il reste possible de placer une tête de lecture illégale au sein de la zone étendue.

### 3. Résumé de l'invention

L'invention ne présente pas au moins certains des inconvénients de l'art antérieur. Plus particulièrement, l'invention se rapporte à un bloc de lecture de carte à mémoire selon la revendication 1. Selon la technique proposée, ladite lèvre inférieure s'étend longitudinalement et parallèlement à un plan d'insertion d'une carte à mémoire dans ledit Bloc de lecture, formant une lèvre d'insertion étendue s'étendant au-delà d'un plan d'insertion.

Ainsi, il n'est pas possible de fixer un dispositif frauduleux au niveau de cette lèvre d'insertion étendue sans que cette fixation soit immédiatement perceptible pour un utilisateur d'attention moyenne.

Selon un mode de réalisation particulier, ladite lèvre d'insertion étendue comprend une face d'insertion, dite face antérieure, sensiblement plane et parallèle à un plan d'insertion d'une carte à mémoire dans ledit bloc de lecture.

Ainsi, cette lèvre inférieure sert de guide vers la zone la lecture des données contenues sur la carte à mémoire.

Selon l'invention, ladite lèvre d'insertion étendue comprend en outre au moins deux languettes de hauteur prédéterminée.

Ainsi, il n'est pas possible d'évider la lèvre d'insertion étendue sans qu'un tel évidement soit immédiatement visible.

Selon une caractéristique particulière, lesdites au moins deux languettes forment un angle prédéterminé avec une face d'insertion, dite face antérieure, sensiblement plane et parallèle à un plan d'insertion d'une carte à mémoire dans ledit bloc de lecture.

Selon une caractéristique particulière, lesdites au moins deux languettes sont espacées l'une de l'autre d'une distance sensiblement égale à une largeur d'une piste magnétique d'une carte à mémoire.

Dans un autre mode de réalisation, l'invention se rapporte également à un terminal de traitement de données transactionnelles selon la revendication 5.

### 4. Figures

D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :
- la figure 1 est une vue schématique en perspective d'un bloc de lecture de l'art antérieur ;
- la figure 2 est une vue schématique d'un bloc de lecture de l'art antérieur auquel un dispositif frauduleux est adjoint ;
- les figures 3 et 4 représentent un mode de réalisation d'un bloc de lecture selon la technique proposée ;
- les figues 5, 6 et 7 représentent un deuxième mode de réalisation d'un bloc de lecture selon la technique proposée.

### 5. Description

Comme explicité préalablement, l'invention permet de s'affranchir des inconvénients de l'art antérieur en modifiant la géométrie de la fente d'insertion destinée à la carte bancaire. Plus particulièrement, la fente d'insertion est conformée de sorte à ce qu'elle comprenne une lèvre d'insertion, positionnée parallèlement au plan d'insertion de la carte à mémoire au sein du lecteur de carte à mémoire.

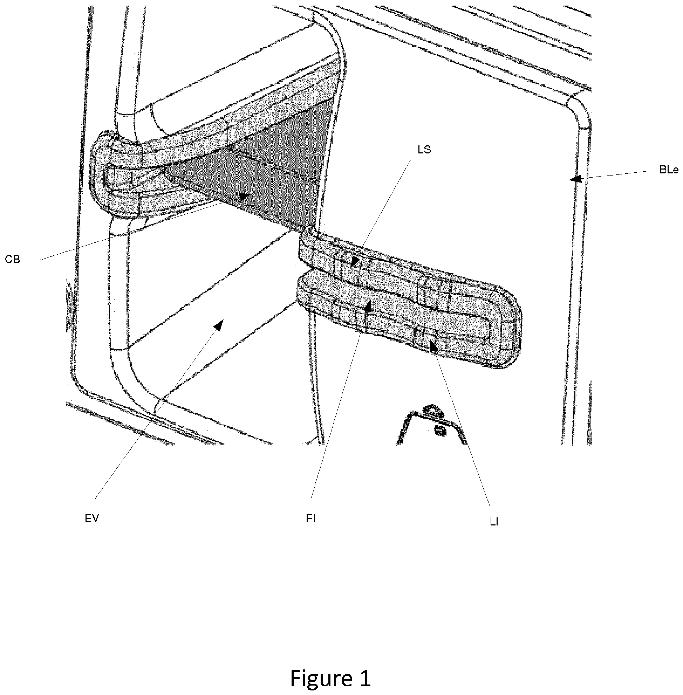

Cette lèvre d'insertion forme une protubérance devant la fente d'insertion. Cette protubérance permet d'éviter l'adjonction d'un dispositif de fraude devant la fente d'insertion. On présente, en relation avec la figure 1, une vue isométrique d'un Bloc de lecture de carte à mémoire appartenant à un terminal de paiement et n'implémentant pas la technique proposée. Ce Bloc de lecture (BLe) est de forme globalement rectangulaire. Le Bloc de lecture (BLe) comprend un évidement (Ev). Cet évidement (Ev) est utilisé pour permettre à deux doigts (par exemple un pouce et un index) d'insérer une carte bancaire (CB) dans une fente d'insertion (FI). Cette fente d'insertion comprend une lèvre inférieure (LI) et une lèvre supérieure (LS). Lors de l'utilisation d'un terminal qui comprend un tel Bloc de lecture (BLe), l'utilisateur place sa carte bancaire (CB) entre son pouce et son index et introduit cette carte bancaire (CB) dans la fente d'insertion (FI) jusqu'à être en butée dans le lecteur de carte (c'est à dire jusqu'à ce qu'il ne puisse plus pousser la carte bancaire).

Dans la plupart des cas, la carte bancaire doit être insérée avec la face embossée vers le haut (la face embossée est celle qui comprend l'inscription du nom du titulaire, du numéro et de la date de validité en relief). La piste magnétique de la carte est quant à elle située sous la face embossée. La piste magnétique est positionnée selon la norme ISO/IEC 7811 et/ou 7816.

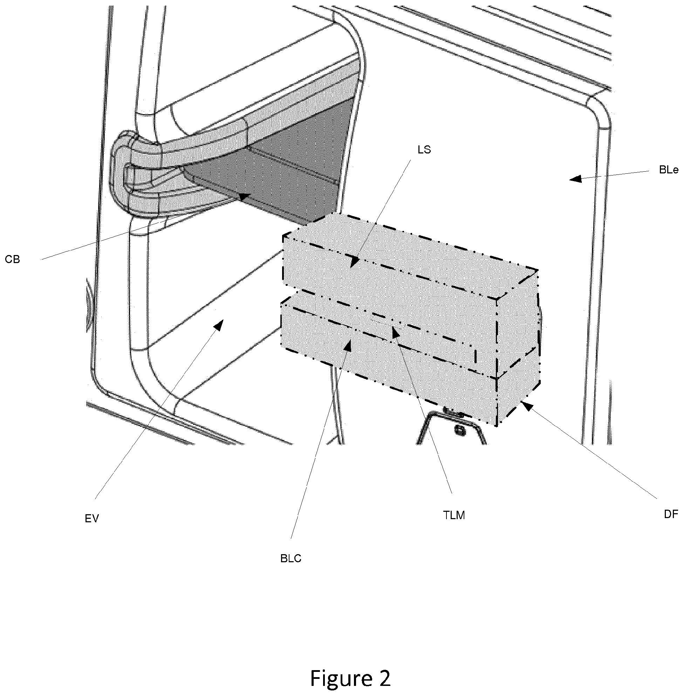

On présente, en relation avec la figure 2, un exemple de dispositif frauduleux placé sur la face avant d'un Bloc de lecture tel que présenté en figure 1. Le dispositif frauduleux (DF) est placé de sorte que la carte bancaire (CB) entre en contact avec une tête de lecture magnétique (TLM) camouflée dans un bloc (BLC) qui est fixé à la lèvre inférieure (LI) et à la lèvre supérieure (LS) de la fente d'insertion (FI). Dans certains cas, le dispositif frauduleux se présente sous la forme d'une façade complète qui se rapporte et se superpose parfaitement à la façade du Bloc de lecture (BLe). Le bloc (BLC) comporte une fente pour l'introduction de la carte, cette fente sert à masquer la tête de fraude ; et la face supérieure de cette fente sert de contre appui pour plaquer la carte sur la tête de fraude. La carte devant être en contact avec la tête pour qu'elle puisse lire la piste magnétique.

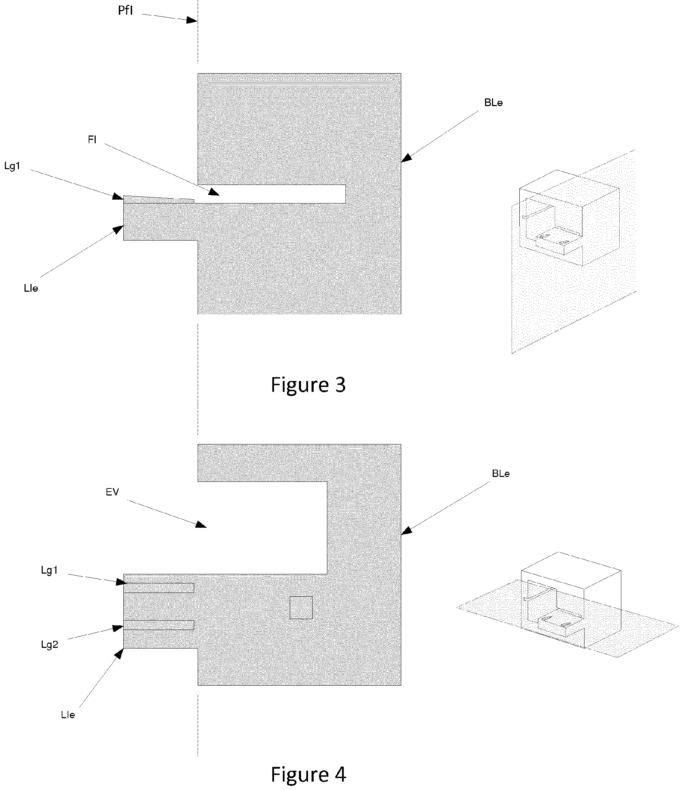

Afin de supprimer la possibilité d'adjonction d'une telle façade, ou d'un tel dispositif frauduleux, les inventeurs ont eu l'idée de modifier la forme de la lèvre inférieure (LI) de la fente d'insertion (FI). Plus particulièrement, comme décrit en relation avec les figures 3 et 4. La figure 3 est un schéma de coupe longitudinale du bloc de lecture (BLe). La figure 4 est un schéma de coupe transversale du bloc de lecture (BLe). Selon la technique proposée, la lèvre inférieure (LI) est étendue longitudinalement afin de comprendre une protubérance, formant ainsi une lèvre inférieure étendue (LIe). La lèvre est dite étendue car elle s'étend au-delà d'un plan d'insertion (Pfl), qui correspond au plan formé par la face avant du bloc de lecture (BLe). C'est bien par cette technique de débord au-delà d'un plan fictif formé par la face avant du bloc de lecture qui est le coeur de la technique proposée. En effet en réalisant un débord au-delà de ce plan fictif, on créé une rupture du volume du bloc de lecture. Cette rupture permet de rendre plus difficile l'adjonction d'un matériel complémentaire frauduleux, car la surface avant du bloc de lecture n'est plus plane. De manière complémentaire, cette modification du volume de la face avant du bloc de lecture peut être effectuée à d'autres emplacements que celui de la fente d'insertion de la carte bancaire.

Dans un premier mode de réalisation, L'épaisseur de la lèvre inférieure étendue (LIe) est sensiblement égale à l'épaisseur de la lèvre inférieure (LI). La forme d'une coupe transversale de la protubérance de la lèvre inférieure étendue (LIe) est un quadrilatère (figure 4). Ce quadrilatère peut par exemple être un rectangle, un trapèze, etc. La forme précise de la lèvre inférieure étendue (LIe) est fonction d'une part du matériau de construction employé et d'autre part de la manière dont cette lèvre est construite. La lèvre inférieure étendue (LIe) comprend une face antérieure (face visible entrant en contact avec la carte à mémoire) et une face postérieure (face non visible, opposée à la face antérieure).

Outre l'adjonction de cette protubérance, les inventeurs ont eu l'idée de munir la face antérieure de deux languettes (Lg1, Lg2). Ces deux languettes permettent de créer un espace vide entre la carte bancaire et la surface de la face antérieure de la lèvre inférieure étendue (LIe). Cet espace assure qu'il n'est pas possible de placer une tête magnétique frauduleuse au sein même de la lèvre inférieure étendue (LIe). En effet, pour permettre une lecture d'une piste magnétique d'une carte bancaire, il est nécessaire que cette piste magnétique soit en contact avec la tête de lecture magnétique de la carte. Avec les languettes (Lg1, Lg2), l'espace vide créé assure que même si une tête magnétique frauduleuse devait être insérée dans la lèvre inférieure étendue (Lle), cette tête magnétique frauduleuse ne pourrait pas entrer en contact avec la piste magnétique de la carte bancaire insérée. Pour entrer en contact avec la piste magnétique de la carte, la tête magnétique frauduleuse devrait être visible (c'est à dire sortir, par un orifice de la lèvre inférieure étendue (Lle), ce qui rendrait la fraude immédiatement visible.

De plus, la surface antérieure de ces languettes (qui entre en contact avec la carte bancaire), n'est pas parallèle à la surface de la face antérieure. Au contraire, la surface antérieure des languettes forment un angle prédéterminé (alpha) avec la surface plane de la face antérieure. Cet angle permet de guider la carte d'une manière prédéterminée. Par ailleurs, les languettes sont espacées entre elle d'une distance sensiblement égale à la largeur de la piste magnétique de la carte bancaire.

Avec une lèvre inférieure étendue et les deux languettes inclinées, on crée une inclinaison du plan d'insertion de la carte bancaire dans le bloc de lecture. Un dispositif de fraude devient alors difficile à réaliser car la fente d'un tel dispositif de fraude ne peut plus se contenter d'être simplement dans le prolongement de la fente du lecteur ; Cette fente doit être décalée et avoir une inclinaison donnée. Sans l'inclinaison, soit la carte va buter contre le lecteur, soit la lecture magnétique ne sera pas possible. Les deux languettes servent donc à créer l'inclinaison de la carte à l'avant du bloc de lecture sans gêner le fonctionnement de la tête dans le bloc de lecture lui-même.

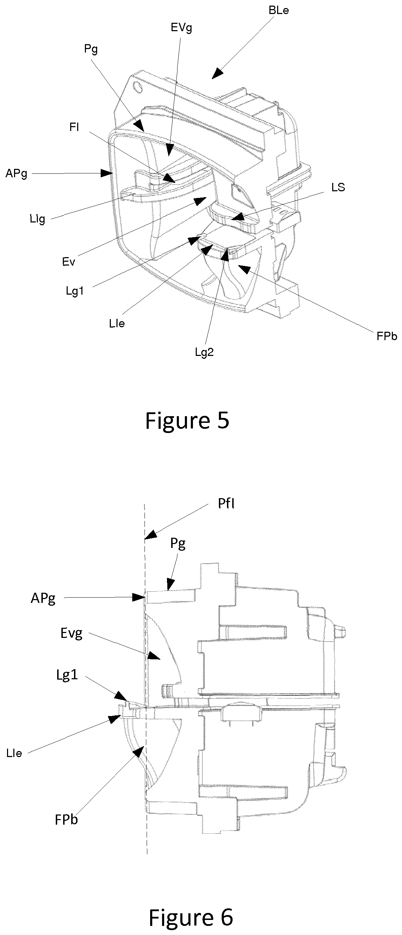

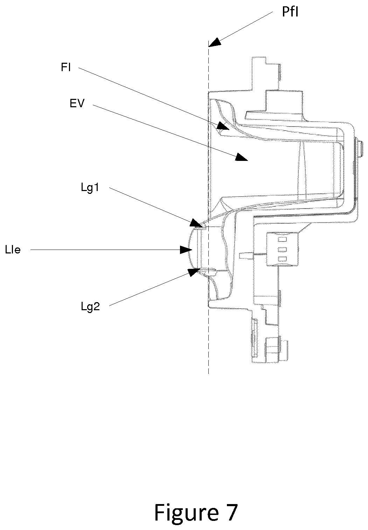

Dans un autre mode de réalisation de la technique proposée, exposé aux figures 5, 6 et 7, la lèvre inférieure est étendue sans toutefois que cette lèvre étendue ne comprenne une face postérieure plane. Au contraire la face postérieure est bombée et s'intègre dans l'évidement du Bloc de lecture. Cette face postérieure bombée (FPb), de forme globalement cylindrique, permet d'éviter une dégradation de la lèvre inférieure étendue. En effet, cette face postérieure est moulée en matériau résistant aux attaques et dégradations (par exemple du métal). Il n'est donc pas possible de pratiqué un évidement dans cette face postérieure sans que la dégradation soit immédiatement visible. Par ailleurs, comme représenté sur les figures 5 à 7, la face avant du bloc de lecture n'est pas uniforme : elle comprend une structure volumique différente de la face avant d'un bloc de lecture « classique », tel que représenté en figure 1. Outre la lèvre inférieure étendue (Lie), sur le côté droit du bloc de lecture, la lèvre inférieure du côté fauche (LIg) est également légèrement proéminente par rapport à la lèvre supérieure gauche. Par ailleurs, l'évidement est également généralisé. Outre l'évidement nécessaire au passage du pouce et de l'index pour introduire la carte, un évidemment « général » (Evg) est agencé en ajoutant un profilé dit de « garde » (Pg): ce profilé forme une garde (une barrière) autour de la zone d'insertion de la carte bancaire. Ce profilé de garde permet de définir un évidement général de la zone d'insertion de la carte bancaire et ainsi de sécuriser celle-ci. Il n'est ainsi plus possible de tenter de plaquer une façade factice frauduleuse sur la façade d'origine du bloc de lecture. Par ailleurs, l'anneau du profilé de garde (APg) permet de définir un plan d'insertion (PfI) qui est en quelque sorte déplacé par rapport au plan d'insertion initial qui devrait être situé au niveau du plan de fixation du bloc de lecture (BLe) (le plan de fixation est le plan qui correspond à la surface comprenant les orifices de fixation (permettant la pose des vis). Il est donc possible de fixer le bloc de lecture sur une structure métallique puis de recouvrir cette structure métallique d'une façade, également métallique (afin de respecter les normes en vigueur) qui peut être couplée à des dispositifs de sécurisation. De tels dispositifs de sécurisation permettent de s'assurer que cette façade d'origine n'est pas altérée ou remplacée.

Dès lors, dans ce mode de réalisation, seul le profilé de garde dépasse de la façade du terminal de paiement et ce profilé de garde matérialise la zone d'insertion de la carte de paiement. Dans ce mode de réalisation, ce profilé de garde a globalement la forme d'un parallélépipède rectangle à bords arrondis.

## Revendications

1. Bloc de lecture (BLe) de carte à mémoire (CM) de forme globalement parallélépipédique rectangle, comprenant une face d'insertion de carte à mémoire (CM), ladite face d'insertion comprenant un évidemment d'insertion (Ev) et une fente d'insertion (FI) d'une carte à mémoire, ladite fente d'insertion comprenant une lèvre inférieure (LI) et une lèvre supérieure (LS), ladite lèvre inférieure s'étendant longitudinalement et parallèlement à un plan d'insertion d'une carte à mémoire dans ledit Bloc de lecture, formant une lèvre d'insertion étendue(LIe) s'étendant au-delà d'un plan d'insertion (PfI), qui correspond au plan formé par la face avant du bloc de lecture, ledit bloc de lecture (BLe) étant **caractérisé en ce que** ladite lèvre d'insertion étendue(LIe) comprend en outre au moins deux languettes (Lg1, Lg2) de hauteur prédéterminée.

2. Bloc de lecture (BLe) selon la revendication 1, **caractérisé en ce que** ladite lèvre d'insertion étendue(LIe) comprend une face d'insertion, dite face antérieure, sensiblement plane et parallèle à un plan d'insertion d'une carte à mémoire dans ledit bloc de lecture.

3. Bloc de lecture (BLe) selon la revendication 1, **caractérisé en ce que** lesdites au moins deux languettes (Lg1, Lg2) forment un angle prédéterminé avec une face d'insertion, dite face antérieure, sensiblement plane et parallèle à un plan d'insertion d'une carte à mémoire dans ledit bloc de lecture.

4. Bloc de lecture (BLe) selon la revendication 1, **caractérisé en ce que** lesdites au moins deux languettes (Lg1, Lg2) sont espacées l'une de l'autre d'une distance sensiblement égale à une largeur d'une piste magnétique d'une carte à mémoire.

5. Terminal de traitement de données transactionnelles du type comprenant un clavier de saisie d'une donnée d'identification personnelle, un écran de visualisation de données transactionnelles, un module de traitement de données transactionnelles, terminal de traitement de données transactionnelles **caractérisé en ce qu'**il comprend un bloc de lecture (BLe) de carte à mémoire (CM) selon l'une quelconque des revendications 1 à 4.

## Patentansprüche

1. Leseblock (BLe) für eine Speicherkarte (CM) von global rechteckiger parallelflacher Form, umfassend eine Einsetzseite einer Speicherkarte (CM), wobei die Einsetzseite eine Einsetzmulde (Ev) und einen Einsetzschlitz (FI) einer Speicherkarte umfasst, wobei der Einsetzschlitz eine untere Lippe (LI) und eine obere Lippe (LS) umfasst, wobei sich die untere Lippe längs und parallel zu einer Einsetzebene einer Speicherkarte in den Leseblock erstreckt, wobei sie eine erweiterte Einsetzlippe (LIe) bildet, die sich über eine Einsetzebene (PfI) hinaus erstreckt, die der Ebene entspricht, die von der Vorderseite des Leseblocks gebildet ist, wobei der Leseblock (BLe) **dadurch gekennzeichnet ist, dass** die erweiterte Einsetzlippe (LIe) ferner mindestens zwei Laschen (Lg1, Lg2) von vorbestimmter Höhe umfasst.

2. Leseblock (BLe) nach Anspruch 1, **dadurch gekennzeichnet, dass** die erweiterte Einsetzlippe (LIe) eine Einsetzseite, Vorderseite genannt, umfasst, die im Wesentlichen eben und zu einer Einsetzebene einer Speicherkarte in den Leseblock parallel ist.

3. Leseblock (BLe) nach Anspruch 1, **dadurch gekennzeichnet, dass** die mindestens zwei Laschen (Lg1, Lg2) einen vorbestimmten Winkel mit einer Einsetzseite, Vorderseite genannt, die im Wesentlichen eben und zu einer Einsetzebene einer Speicherkarte in den Leseblock parallel ist, bilden.

4. Leseblock (BLe) nach Anspruch 1, **dadurch gekennzeichnet, dass** die mindestens zwei Laschen (Lg1, Lg2) voneinander um einen Abstand im Wesentlichen gleich einer Breite einer Magnetspur einer Speicherkarte entfernt sind.

5. Endgerät für die Verarbeitung von Transaktionsdaten, umfassend eine Tastatur zur Eingabe eines persönlichen Identifikationsdatums, einen Bildschirm zur Anzeige von Transaktionsdaten, ein Modul zur Verarbeitung von Transaktionsdaten, wobei das Endgerät für die Verarbeitung von Transaktionsdaten **dadurch gekennzeichnet ist, dass** es einen Leseblock (BLe) für eine Speicherkarte (CM) nach einem der Ansprüche 1 bis 4 umfasst.

## Claims

1. Memory card (CM) reader unit (BLe) of a generally rectangular parallelepiped shape, comprising a memory card (CM) insertion face, said insertion face comprising an insertion recess (Ev) and a memory card insertion slot (FI), said insertion slot comprising a lower lip (LI) and an upper lip (LS), said lower lip extending longitudinally and parallel to an insertion plane of a memory card in said Reader unit, forming an extended insertion lip (LIe) extending beyond an insertion plane (PfI) which correspond to the plan formed by the front face of said reader unit, said reader unit (BLe) being **characterized in that** said extended insertion lip (LIe) further comprises at least two tabs (Lg1, Lg2) of a predetermined height.

2. Reader unit (BLe) according to claim 1, **characterised in that** said extended insertion lip (LIe) comprises an insertion face, referred to as the front face, substantially flat and parallel to an insertion plane of a memory card in said reader unit.

3. Reader unit (BLe) according to claim 1, **characterised in that** said at least two tabs (Lg1, Lg2) forming a predetermined angle with an insertion face, referred to as the front face, substantially flat and parallel to an insertion plane of a memory card in said reader unit.

4. Reader unit (BLe) according to claim 1, **characterised in that** said at least two tabs (Lg1, Lg2) are spaced apart by a distance substantially equal to the width of a magnetic strip of a memory card.

5. Transactional data processing terminal of the type comprising a keyboard for entering personal identification data, a screen for viewing transactional data, a transactional data processing module, transactional data processing terminal **characterised in that** it comprises a memory card (CM) reader unit (BLe) according to any of claims 1 to 4.
